## Europäisches Patentamt
## European Patent Office
## Office européen des brevets

(11) Veröffentlichungsnummer : **0 012 810**
**B1**

(12) # EUROPÄISCHE PATENTSCHRIFT

(45) Veröffentlichungstag der Patentschrift : 03.02.82

(21) Anmeldenummer : 79104157.7

(22) Anmeldetag : 26.10.79

(51) Int. Cl.³ : **B 29 H 7/22**

(54) Verfahren zum Herstellen von endlosen Antriebsriemen.

(30) Priorität : 22.12.78 DE 2855622

(43) Veröffentlichungstag der Anmeldung : 09.07.80 (Patentblatt 80/14)

(45) Bekanntmachung des Hinweises auf die Patenterteilung : 03.02.82 Patentblatt 82/05

(84) Benannte Vertragsstaaten : AT BE DE FR GB IT SE

(56) Entgegenhaltungen :
FR - A - 2 291 850
FR - A - 2 325 496
US - A - 2 573 643
US - A - 2 600 775
US - A - 2 957 677
US - A - 3 932 078

(73) Patentinhaber : **Continental Gummi-Werke Aktiengesellschaft**
**Königsworther Platz 1 Postfach 169**
**D-3000 Hannover 1 (DE)**

(72) Erfinder : **Menell, Hans**
**Hermann-Löns-Weg 4**
**D-3000 Hannover 91 (DE)**

Imprimerie Jouve, 18, rue St-Denis, 75001 Paris, France

## Verfahren zum Herstellen von endlosen Antriebsriemen

Die Erfindung bezieht sich auf Verfahren zum Herstellen von endlosen Antriebsriemen aus natürlichem oder synthetischen Kautschuk mit vorzugsweise in Längsrichtung durchlaufenden eingebetteten fadenförmigen Festigkeitsträgern, insbesondere von Mehrfach-Keilriemen und ähnlichen über ihren Innenumfang durchlaufende Längsrippen aufweisenden Riemen, wobei ein Rohling in umgekehrter Schichtenfolge, also mit dem Rippenprofil nach außen weisend, aufgebaut, in eine Außenform gebracht und in dieser ausgeformt und vulkanisiert wird und die Riemen in ihren Gebrauchszustand gewendet werden.

Im Gegensatz beispielsweise zu Zahnriemen, die sich ihrer quer ausgerichteten Verzahnung wegen selbst in längeren Wickeln verhältnismäßig leicht in Axialrichtung von dem zum Fertigvulkanisieren verwendeten inneren Formkern abziehen lassen und die daher auch von vornherein im Gebrauchszustand mit von innen nach außen fortschreitender Schichtenfolge aufgebaut werden können, bieten die mit längs durchlaufenden Verrippungen ausgebildeten Mehrfach-Keilriemen, Rillenriemen u. dgl. das Problem des Entformens ohne Durchmessererweiterungen und daraus folgende schädliche Zerrungen. Es hat sich eingebürgert, diese Schwierigkeiten durch Aufbauen der Riemenrohlinge in Rückenlage, das heißt in einer von außen nach innen fortschreitenden Schichtenfolge aufzubauen und die fertigvulkanisierten, gegebenenfalls erst auf ihre vorgesehene Breite zugeschnittenen Riemen anschließend zu wenden — ein in der Praxis mit « Krempeln » bezeichneter Vorgang. Das Ausformen der Längsrippen und das Vulkanisieren muß in diesem Falle in einer Außenform vorgenommen werden. Einer solchen Außenform können zwar die fertigen Riemen ohne besondere Schwierigkeiten entnommen werden. Problematisch gestaltet sich aber dagegen das Einbringen der vorbereiteten Rohlinge, da diese entweder mit Untermaß hergestellt und innerhalb der Form auf einen größeren Durchmesser aufgeweitet werden müßten oder andernfalls, um nachteiliges Falten der Rohlingswandungen mit der Gefahr von Knickschäden und unkontrollierbaren Verlagerungen der Festigkeitsträger zu vermeiden, eine aus zwei oder mehr Teilen segmentartig zusammengesetzt Form bedingen. Ein Beispiel hierfür bietet die aus der US-Patentschrift 2 600 775 bekannte Vulkanisierform, die überdies nur zum Herstellen von einzelnen, das heißt nicht im Wickel zusammenhängenden Keilriemen geeignet ist. Abgesehen von der komplizierten Formenkonstruktion beeinträchtigen aber sowohl die erzwungenen Durchmesseränderungen als auch der unvermeidlich an den Stoßfugen der Außenform sich bildende Austrieb die Rundlaufgenauigkeit der fertigen Riemen und geben Anlaß zu kostenverursachenden Nacharbeiten.

Der Erfindung liegt demgegenüber als Aufgabe zugrunde, Antriebsriemen mit besonderer, in Rippen oder Blöcke aufgelöster Oberflächenstruktur, insbesondere Mehrfach-Keilriemen mit hoher Rundlaufgenauigkeit in wirtschaftlicher Weise herzustellen. Diese Aufgabe wird, ausgehend von Verfahren der eingangs geschilderten Gattung, erfindungsgemäß dadurch gelöst, daß der auf Maß vorbereitete Rohling zum Einlegen in die ungeteilte Außenform auf einen dem kleinsten Innendurchmesser der Außenform entsprechenden Außendurchmesser verkleinert und innerhalb der Außenform auf oder im wesentlichen auf seinen ursprünglichen Außendurchmesser erweitert wird.

Die Erfindung ermöglicht den Einsatz ungeteilter Außenformen und sichert damit eine Grundvoraussetzung für das Herstellen hochwertiger Riemen ohne jede aus Teilungsfugen herrührenden und zu Nacharbeiten zwingenden oder auch die Laufruhe der Riemen im Gebrauch beeinträchtigenden Oberflächen-Markierungen. Die andererseits hieraus von vornherein anscheinend vorgegebenen Grenzen werden überraschend mit der neuartigen Verfahrensweise überwunden, wonach die Festigkeitsträger bereits in den Riemenrohlingen mit dem vorgesehenen endgültigen Druchmesser eingebaut und als Ergebnis des Formungs- und Vulkanisiervorganges innerhalb der Außenform auf diesen endgültigen und gleichzeitig ursprünglichen Durchmesser auch wieder zurückgeführt werden. Es stellt sich infolgedessen in den fertigen Riemen mit Sicherheit stets die ursprüngliche Fadenlage ein, so daß die schließlich der Form entnommenen Riemen in ständig wiederkehrender Folge gleichmäßig mit bisher nicht erreichbarer Genauigkeit ausfallen. Umgekehrt ist der Ausschußanteil aufgrund von Verfahrensmängeln praktisch gänzlich aufgehoben und allenfalls nur noch auf Bedienungsfehler zurückzuführen.

Das in Ausführung des Erfindungsgedankens zum Verkleinern der Riemenrohlinge angewandte spezielle Verfahren richtet sich in seinen wesentlichen Schritten nach der Provenienz und der Beschaffenheit der Festigkeitsträger. Für die in hochwertigen Riemen bevorzugt verwendeten Festigkeitsträger aus synthetischen Polymeren wie beispielsweise Polyamiden oder Polyestern nutzt die Erfindung die mit dem bekannten Wärmeschrumpfen dieser Kunststoffe gegebenen Möglichkeiten, indem nach einem wichtigen Teilmerkmal die Riemenrohlinge zum Verkleinern ihres Durchmessers einer erhöhten Temperatur ausgesetzt werden. Der Verfahrensablauf ist dann, verdeutlicht an einem beispielsweisen Ausführungsschema, etwa wie folgt :

— Aufbauen des Rohlings in Rückenlage auf einer Wickeltrommel (Wickeldurchmesser = Fertigungsdurchmesser) ;
— Abnehmen des Rohlings von der Trommel und Einbringen in einen Wärmeschrank (Schrumpfen) ;

— Einbringen des Rohlings im erwärmten Zustand in die Außenform ;

— Einlegen einer Druck- bzw. Heizmanschette in den Rohling, Aufweiten und Ausformen (Fertigdurchmesser = Wickeldurchmesser) ;

— Vulkanisieren, anschließend Kühlen (Fixieren der Riemenlänge) ;

— Entformen ;

— Abstechen vom Wickel in Rückenlage, anschließend Krempeln der Einzelriemen.

Riemen mit Festigkeitsträgern z.B. aus natürlichen Polymeren oder anderen in Wärme nicht schrumpfenden Werkstoffen können schonend auf einen kleineren Rohlingsdurchmesser verkleinert werden, indem sie nach einem anderen Teilmerkmal der Erfindung einem von außen nach innen wirkenden Druckgefälle ausgesetzt werden, wie dies in anderem Zusammenhang im Zuge des Aufbauens von Luftreifen bekannt ist (deutsche Offenlegungsschrift 2 545 381).

## Ansprüche

1. Verfahren zum Herstellen von endlosen Antriebsriemen aus natürlichem oder synthetischem Kautschuk mit vorzugsweise in Längsrichtung durchlaufenden eingebetteten fadenförmigen Festigkeitsträgern, insbesondere von Mehrfach-Keilriemen und ähnlichen über ihren Innenumfang durchlaufende Längsrippen aufweisenden Riemen, wobei ein Rohling in umgekehrter Schichtenfolge, also mit dem Rippenprofil nach außen weisend aufgebaut, in eine Außenform gebracht und in dieser ausgeformt und vulkanisiert wird und die Riemen in ihren Gebrauchszustand gewendet werden, dadurch gekennzeichnet, daß der auf Maß vorbereitete Rohling zum Einlegen in die ungeteilte Außenform auf einen dem kleinsten Innendurchmesser der Außenform entsprechenden Außendurchmesser verkleinert wird und innerhalb der Außenform auf oder im wesentlichen auf seinen ursprünglichen Außendurchmesser erweitert wird.

2. Verfahren nach Anspruch 1, dadurch gekennzeichnet, daß der Rohling zum Verkleinern seines Durchmessers einem von außen nach innen wirkenden Druckgefälle ausgesetzt wird.

3. Verfahren nach Anspruch 1, dadurch gekennzeichnet, daß der Festigkeitsträger aus in der Wärme schrumpfenden synthetischen Polymeren aufweisende Rohling zum Verkleinern seines Durchmessers einer erhöhten Temperatur ausgesetzt wird.

## Claims

1. A method for manufacturing endless driving belts of natural or synthetic rubber with threadlike reinforcement members extending in a longitudinal direction embedded therein, particularly multiple V-belts and similar belts having longitudinal ribs extending continuously over the inner periphery thereof, wherein a blank built up in a reverse layer sequence is placed into an outer mould and moulded and vulcanized therein to form a . belt, the belt thereafter being removed from the outer mould and turned right-side-out, characterized in that the blank manufactured oversize with respect to the outer mould, is reduced in size to an external diameter corresponding to the smallest internal diameter of the outer mould and is then expanded within the outer mould to or substantially to its original external diameter.

2. A method as claimed in claim 1, characterized in that the blank is exposed to a pressure differential acting from the outside to the inside to reduce its diameter.

3. A method as claimed in claim 1, characterized in that the blank having reinforcement members of synthetic polymers which shrink in heat, is exposed to an elevated temperature to reduce its diameter.

## Revendications

1. Procédé de fabrication de courroies de transmission sans fin de caoutchouc naturel ou synthétique comportant une armature noyée d'éléments filiformes de traction s'étendant en direction longitudinale, particulièrement du type multi-V ou du type similaire ayant des nervures longitudinales autour de la périphérie intérieure, à partir d'un corps de courroie des couches inversées, plaçant ceci dans un moule extérieur pour lui former et vulcaniser et puis retroussant la courroie dans sa position de régime, caractérisé en ce que le corps de courroie fabriqué trop grand que le moule extérieur est réduit à un diamètre extérieur correspondant au diamètre intérieur le plus petit du moule extérieur et après cela est élargi au-dedans le moule extérieur à ou presqu'à son diamètre extérieur d'origine.

2. Procédé selon la revendication 1, caractérisé en ce que le corps de courroie est exposé à une différence de pression efficace du dehors en l'intérieur pour réduire son diamètre extérieur.

3. Procédé selon la revendication 1, caractérisé en ce que le corps de courroie comportant des éléments de traction d'une matière polymère synthétique se raccourcissant en chaleur est exposé à une température élevée pour réduire son diamètre extérieur.